# FASCICULE DE BREVET EUROPEEN

(11) **EP 0 922 177 B1**
(45) Date de publication et mention de la délivrance du brevet: **16.02.2000**
(21) Numéro de dépôt: 97938942.6
(22) Date de dépôt: 22.08.1997
(51) Int. Cl.: F16L 11/00, F16L 11/16, B29C 47/02

(54) **PROCEDE DE FABRICATION D'UNE CONDUITE FLEXIBLE**
VERFAHREN ZUR HERSTELLUNG EINER BIEGSAMEN LEITUNG
METHOD FOR MANUFACTURING A FLEXIBLE DUCT

(30) Priorité: 27.08.1996 FR 9610490
(43) Date de publication de la demande: 16.06.1999
(73) Titulaire: COFLEXIP, 75116 Paris (FR)
(72) Inventeur: MORAND, Michel, Paul, F-76480 Duclair (FR)
(74) Mandataire: Levy, David
(86) Numéro de dépôt international: FR9701518
(87) Numéro de publication internationale: WO9809106

(56) Documents cités:
- EP-A- 0 246 019
- WO-A-92/02751
- WO-A-95/24578
- FR-A- 2 136 974
- FR-A- 2 268 614
- FR-A- 2 569 462
- US-A- 3 311 133
- US-A- 3 318 338
- US-A- 3 687 169
- PATENT ABSTRACTS OF JAPAN vol. 008, no. 022 (M-272), 31 janvier 1984 & JP 58 183233 A (MITSUI SEKIYU KAGAKU KOGYO KK), 26 octobre 1983,

## Description

La présente invention concerne un procédé de fabrication d'une conduite flexible susceptible d'être utilisée pour le transport de fluides tels que des hydrocarbures par exemple.

Plusieurs types de conduite flexibles sont utilisés. Certaines conduites flexibles comprennent de l'intérieur vers l'extérieur, une gaine interne d'étanchéité en matière plastique, élastomère ou autre matériau approprié relativement souple ; un tube métallique flexible non étanche qui doit résister aux efforts développés par la pression du fluide circulant dans la conduite ; une ou plusieurs nappes d'armures et au moins une gaine d'étanchéité externe en matériau polymérique. Ce type de conduite flexible est souvent dénommé "smooth-bore" par les spécialistes en la matière.

D'autres conduites flexibles dénommées "rough-bore" comprennent, de l'intérieur vers l'extérieur, un tube métallique flexible non étanche, appelé carcasse, constitué par un profilé enroulé en spires agrafées les unes sur les autres, comme par exemple un feuillard agrafé ou un fil de forme agrafé tel qu'un fil en T, en U, en S ou en Zêta, une gaine d'étanchéité interne en matériau polymérique, une ou plusieurs nappes d'armures capables de résister aux efforts développés par la pression du fluide circulant dans la conduite et aux efforts extérieurs auxquels est soumise la conduite flexible, et au moins une gaine de protection externe du type polymérique.

Dans ce dernier type de conduites flexibles, la gaine d'étanchéité interne est directement extrudée, en continu, sur ladite carcasse qui présente entre les spires enroulées des interstices ou déjoints.

Pour assurer un bon contact entre la gaine d'étanchéité interne et la carcasse métallique, il est nécessaire que le diamètre interne de la gaine d'étanchéité interne soit le plus proche possible et même égale au diamètre externe de la carcasse métallique flexible.

Lors de la fabrication d'une conduite flexible du type "rough-bore", la gaine d'étanchéité interne qui est extrudée sur la carcasse métallique, se contracte sur cette dernière au cours du refroidissement. Suivant les matériaux utilisés pour la réalisation de la gaine d'étanchéité interne, on observe, après refroidissement, des déformations appelées "retassures" qui apparaissent sur la face interne de ladite gaine d'étanchéité interne et notamment de part et d'autre des déjoints entre les spires de la carcasse métallique. De telles retassures sont dues, semble-t-il, au rétreint différentiel du matériau utilisé pour la gaine d'étanchéité interne, en raison de la variation du gradient de refroidissement dans l'épaisseur de la gaine d'étanchéité interne, cumulé à l'effet des déjoints des spires de la carcasse métallique. En effet, la gaine plastique d'étanchéité extrudée étant en contact par sa face interne sur la carcasse métallique qui est à la température ambiante, il en résulte que le refroidissement de ladite face interne est très rapide, ce qui provoque des irrégularités de surface ou retassures ; ce phénomène est amplifié au niveau des déjoints des spires de la carcasse métallique, le rétreint différentiel en ces endroits provoquant des variations d'épaisseur locales de la gaine d'étanchéité interne. Lorsque la gaine d'étanchéité est en polymère semi-cristallin, sensible à la présence de défauts de surface entraînant une déchéance de la gaine pouvant aller jusqu'à la rupture, comme par exemple le PVDF, cela entraîne très souvent, en fonctionnement une dégradation de ladite gaine d'étanchéité (rupture) qui n'assure plus alors sa fonction d'étanchéité.

Pour remédier à un tel inconvénient et pour résoudre le problème posé par l'apparition des retassures, il fut trouvé et adopté la solution qui consiste à disposer, entre la carcasse métallique et la gaine d'étanchéité interne, une sous-couche sacrificielle de faible épaisseur, en un matériau approprié tel que du PVDF. La gaine d'étanchéité interne est extrudée alors sur ladite sous-couche sacrificielle mais en s'assurant qu'il n'y est pas de "soudure" ou liaison intime entre la gaine d'étanchéité et la sous-couche sacrificielle". Afin que les fissures qui se propagent depuis la face interne de la sous-couche vers l'extérieur soient bloquées à l'interface de la gaine d'étanchéité et de la sous-couche sacrificielle.

L'inconvénient majeur de cette solution est le glissement susceptible de se produire entre la gaine d'étanchéité interne et la sous-couche sacrificielle au niveau des extrémités de la conduite flexible, ainsi que les surcoûts de matière première et de transformation occasionnés par la présence de ladite sous-couche sacrificielle.

D'autres solutions ont été recherchées pour éliminer l'apparition des retassures ou atténuer leurs effets.

Parmi ces dernières solutions qui ont pour objet la mise en place d'une gaine d'étanchéité interne présentant, après refroidissement, une face interne cylindrique et lisse mettent en oeuvre une conformation qui est soit interne, avec comme inconvénient principal la création de fissures longitudinales sur la face interne de la gaine d'étanchéité et un repli de matière sur la face externe, soit externe avec comme inconvénient l'absence totale d'ancrage de la gaine d'étanchéité sur la carcasse métallique.

Dans la technique de fabrication de conduites flexibles du type "smooth-bore", qui consiste à réaliser séparément la gaine interne d'étanchéité par tout moyen approprié tel que l'extrusion, et la carcasse métallique, on a préconisé de chauffer la gaine d'étanchéité ou la carcasse métallique, une fois que les deux éléments sont assemblés afin de maintenir ou de rendre plastique la gaine d'étanchéité pour l'obliger à fluer dans les déjoints des spires de la carcasse métallique. De tels procédés de fabrication sont décrits notamment dans FR-A-2 268 614 (COFLEXIP) et l'addition FR-A-2 136 974 (IFP).

Mais ces procédés ont pour unique but de provoquer un fluage permanent de la gaine d'étanchéité polymérique entre les spires de la carcasse métallique, après ou en même temps que des contraintes sont développées dans la gaine d'étanchéité interne pour réaliser un contact intime, les contraintes développées étant par exemple dues à une mise en pression de ladite gaine interne d'étanchéité.

Dans un exemple de mise en oeuvre décrit dans le brevet FR-A-2 268 614 et concernant une conduite flexible comprenant une gaine périphérique extrudée sur un ensemble comprenant de l'intérieur vers l'extérieur, une gaine interne d'étanchéité, une voûte de pression, deux nappes d'armures et un treillis métallique, il est préconisé de chauffer l'ensemble avant l'extrusion de la gaine périphérique de façon à maintenir au moins la face interne de ladite gaine périphérique à l'état plastique ou plus exactement à l'état thermoplastique afin, et c'est le but recherché, de faire fluer la face interne dans les mailles du treillis métallique, pour les remplir totalement et ainsi réaliser l'accrochage total de la gaine périphérique sur le treillis métallique. Dans ces conditions, il est impératif de chauffer fortement l'ensemble, à des températures qui sont de l'ordre de plusieurs centaines de degrés Celsius. De telles techniques ont donné de si mauvais résultats qu'elles ont été abandonnées très rapidement, car le remplissage aussi bien des interstices de la voûte de pression que des mailles du treillis métallique rigidifiait la conduite et diminuait en conséquence la propriété essentielle de flexibilité qu'elle doit présenter impérativement.

La présente invention a pour but de proposer un procédé de fabrication de conduites flexibles du type "rough-bore" qui permet d'éliminer les retassures ou autres irrégularités de surface susceptibles d'apparaître sur la face interne de la gaine d'étanchéité interne.

La présente invention a pour objet un procédé de fabrication de conduites flexibles, qui est caractérisé en ce qu'il consiste à chauffer le tube flexible métallique ou carcasse métallique à une température comprise entre 20 et 90°C, en amont des moyens d'extrusion, de manière à éviter ainsi un refroidissement brutal de la face interne lors de l'extrusion sur la carcasse métallique.

La présente invention réside dans le fait que le procédé de fabrication d'une conduite flexible du type comprenant, de l'intérieur vers l'extérieur, un tube métallique flexible à enroulement hélicoïdal de spires, une gaine interne d'étanchéité disposée autour dudit tube métallique flexible, au moins une nappe d'armures enroulée autour de ladite gaine d'étanchéité interne et au moins une gaine d'étanchéité externe, la gaine d'étanchéité interne étant extrudée à l'aide de moyens d'extrusion sur le tube métallique flexible, caractérisé en ce qu'il consiste, en outre, à chauffer ledit tube métallique flexible en amont des moyens d'extrusion et à une température comprise entre 20 et 90°C.

Le procédé est caractérisé en ce que la température de chauffage du tube métallique flexible est inférieure à la température pour laquelle le matériau de la gaine interne d'étanchéité remplirait, par fluage, au moins 95% du volume des espaces entre les spires de ladite carcasse métallique.

Le procédé est caractérisé en ce que la température est sensiblement constante sur toute la périphérie du tube métallique flexible.

Le procédé est caractérisé en ce que les moyens de chauffage sont constitués par un chauffage infrarouge ou tout autre moyen approprié comme par exemple des moyens de chauffage par induction, par convection, etc.

Le procédé est caractérisé en ce que la température de chauffage du tube métallique flexible est déterminée en fonction de la nature et de la température d'extrusion du matériau constituant la gaine d'étanchéité interne et des caractéristiques thermiques et géométriques de ladite carcasse.

Le procédé est caractérisé en ce que la température de chauffage du tube métallique flexible est déterminée en fonction de la vitesse de défilement dudit tube métallique flexible dans les moyens d'extrusion.

Le procédé est caractérisé en ce que le tube métallique flexible est constitué par un feuillard agrafé.

Le procédé est caractérisé en ce que le tube métallique flexible est réalisé par un enroulement hélicoïdal de fils dont la section est notamment en S, T, U ou zêta.

De ce fait, la gaine d'étanchéité interne ne flue que partiellement dans les déjoints, ce qui permet de préserver la flexibilité à la conduite tout en évitant la création de retassures qui sont une source de défauts susceptibles d'accélérer une détérioration de la gaine d'étanchéité interne lorsque des fissures apparaissent ou sont susceptibles d'apparaître lors de l'utilisation de la conduite flexible selon l'invention.

Il est à noter que le chauffage de la carcasse ne participe nullement à l'accrochage proprement dit de la gaine d'étanchéité interne sur la carcasse, cet accrochage étant réalisé en aval de la tête d'extrusion, par une dépression dans l'annulaire entre la carcasse et la gaine d'étanchéité interne.

D'autres avantages et caractéristiques de la présente invention apparaîtront plus clairement à la lecture de la description d'un mode de réalisation, ainsi que des dessins annexés sur lesquels :

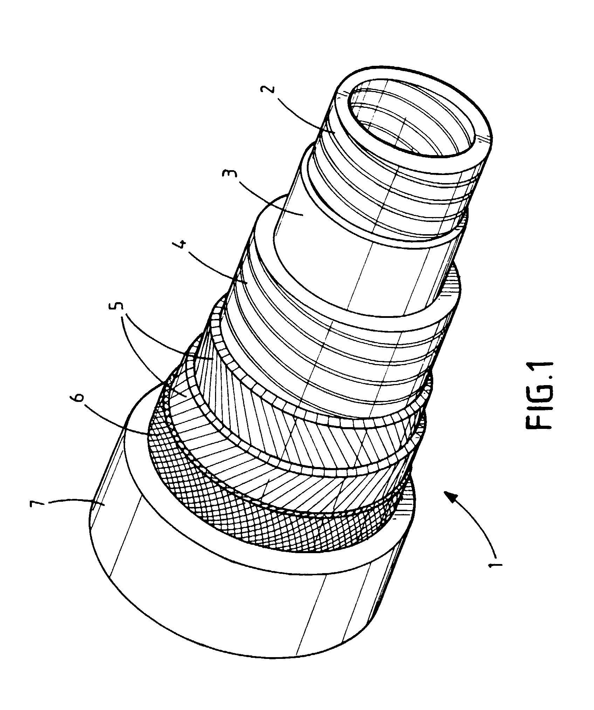

- la figure 1 est une vue en perspective partielle et arrachée d'une conduite flexible du type rough-bore,
- la figure 2 est une vue en coupe et partielle d'une partie de la conduite flexible de la figure 1 et comprenant des retassures,
- la figure 3 est une représentation synoptique des moyens pour la mise en oeuvre du procédé selon l'invention,
- la figure 4 est une vue en coupe partielle d'une partie de la conduite flexible obtenue selon l'invention.

Une conduite flexible 1 du type rough-bore, par opposition à celle qui est désignée sous les termes de smooth-bore, comprend de l'intérieur vers l'extérieur :
- un tube métallique flexible ou carcasse 2, réalisé par enroulement hélicoïdal de fil métallique de section prédéterminée,
- une gaine d'étanchéité interne 3 disposée autour de la carcasse 2,
- une voûte de pression 4,
- une ou plusieurs nappes d'armures 5,
- éventuellement une bande intermédiaire 6, et
- une gaine d'étanchéité externe 7.

Les gaines d'étanchéité interne 3 et externe 7 sont habituellement obtenues par extrusion d'une matière plastique appropriée telle qu'un polymère et c'est pourquoi on les désigne généralement par gaines polymériques.

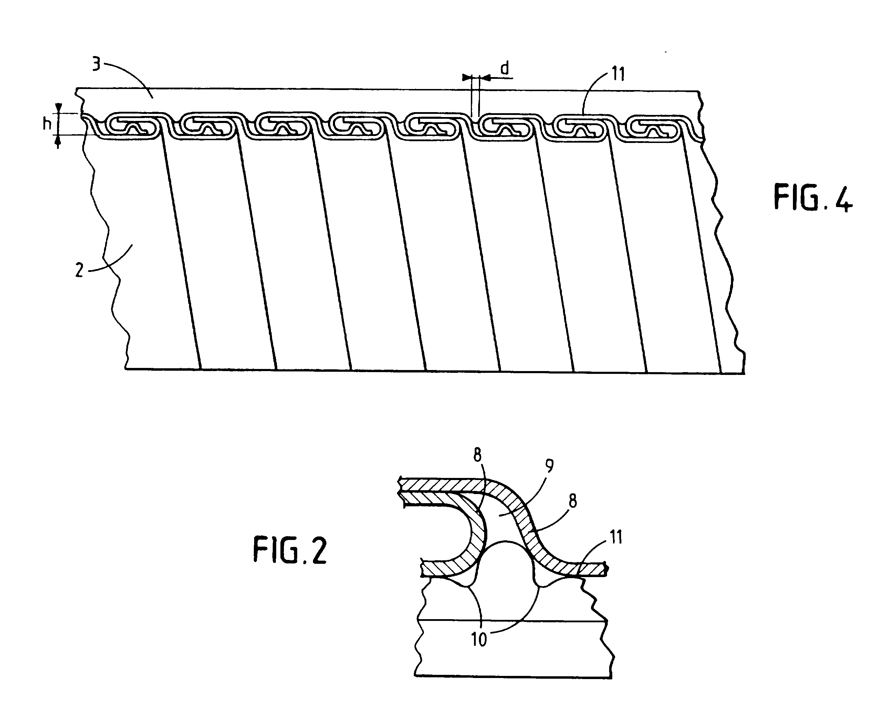

Entre les spires consécutives 8 de l'enroulement hélicoïdal, réalisé pour l'obtention de la carcasse 2, sont ménagés des espaces ou déjoints 9, visibles à une échelle agrandie sur les figures 2 et 4.

Lorsqu'on extrude la gaine d'étanchéité interne 3 sur la carcasse métallique 2, la gaine polymérique extrudée 3 pénètre, par fluage, dans les espaces 9 et se contracte sur la carcasse 2 lors du refroidissement en provoquant notamment des retassures 10 qui sont des irrégularités qui apparaissent sur la surface interne 11 de ladite gaine 3. En effet, la gaine plastique sort de l'extrudeuse à une température qui est de l'ordre de plusieurs centaines de degrés Celsius alors que la carcasse 2 est à la température ambiante qui peut varier de -10°C à +40°C en fonction du lieu dans lequel est effectuée la fabrication de la conduite flexible 1. Le contact brutal de la matière extrudée sur la carcasse métallique provoque un refroidissement brutal de la face interne 11 de la gaine 3 et par suite la formation de retassures 10 notamment au niveau des déjoints 9 entre spires 8, et qui sont dues au rétreint différentiel du matériau plastique (variation du gradient de refroidissement dans l'épaisseur de la gaine cumulé à l'effet des déjoints entre spires de la carcasse). Le phénomène de retassure est amplifié au niveau des déjoints 9 entre spires 8 de la carcasse 2, le rétreint différentiel, à ces endroits, entraînant des variations d'épaisseur locales de la gaine 3.

Lorsque la matière de la gaine 3 est un polymère semi-cristallin sensible à la présence de défauts de surface entraînant une déchéance de la gaine pouvant aller jusqu'à la rupture comme par exemple le PVDF, cela entraîne parfois, en utilisation (bending et cycle thermique), une dégradation de la gaine d'étanchéité 3 pouvant aller jusqu'à une rupture totale de ladite gaine d'étanchéité qui n'assure plus alors sa fonction d'étanchéité. Parfois, il peut se produire une rupture de ladite gaine d'étanchéité lorsque des fissures se propagent totalement dans l'épaisseur de la gaine d'étanchéité 3 en raison de la présence des retassures 10.

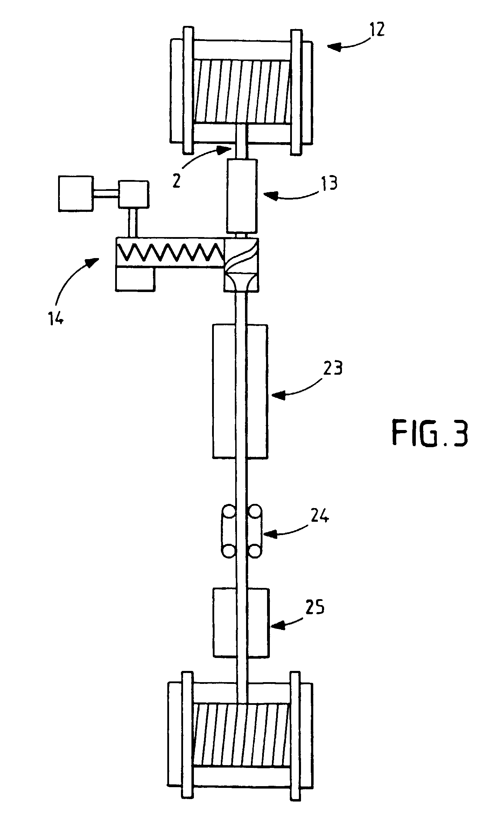

La figure 3 représente un schéma synoptique des moyens pour la mise en oeuvre du procédé selon l'invention.

La carcasse 2 est tirée à partir d'une bobine 12 et passe dans un four de chauffage 13 dans lequel elle est chauffée à une température comprise entre 20 et 90°C, en fonction notamment de la nature du matériau constituant la gaine d'étanchéité interne 3 qui est extrudée par les moyens d'extrusion désignés dans leur ensemble par la référence 14 et comprenant notamment une réserve de matière plastique 15, telle que du PVDF, qui est reliée à une extrudeuse 16, par exemple du type à vis 17 entraînée en rotation par un moteur 18, et une tête d'extrusion 19.

Selon l'invention, le four de chauffage 13 est situé en amont de la tête d'extrusion 19 de sorte que lorsque la carcasse 2 sort de la tête d'extrudeuse 19, elle soit à la température déterminée. Ainsi, lorsque la matière plastique est extrudée sur la carcasse, dans la tête d'extrusion 19, un refroidissement brutal de la gaine 3 est évité au contact de la carcasse 2. De plus, la température de la carcasse 2 est déterminée de façon que la gaine interne qui est à une température élevée, plus de 200°C, ne remplisse qu'une partie des déjoints 9 entre spires 8. Une caractéristique importante de l'invention est de ne pas permettre le remplissage, par fluage, desdits déjoints 9, faute de quoi la carcasse 2 perdrait une partie de sa flexibilité. En effet, au cours des essais, on s'est aperçu qu'en utilisant par exemple une matière plastique telle que celle désignée par la référence KYNAR D'ATO, un chauffage de la carcasse 2 compris entre 30 et 50°C produirait un fluage limité dans les déjoints 9 des spires mais des défauts de surface ou retassures aux bords des déjoints seraient susceptibles de provoquer la déchéance prématurée de l'étanchéité. Un chauffage compris entre 50 et 70°C provoque un fluage plus important mais acceptable pour conférer à la conduite une bonne flexibilité sans apparition de défauts de surface ou retassures. Une température de la carcasse 2 entre 75 et 90°C produit un remplissage total des déjoints 9 et même des interstices latéraux entre spires 8 Cela signifie que pour la matière utilisée ci-dessus, la température de chauffage de la carcasse 2 doit être comprise entre 50 et 70° C, afin de limiter le fluage de matière à une certaine profondeur dans les déjoints 9 tout en évitant la formation de retassures.

La carcasse 2 et la gaine d'étanchéité interne 3 passent ensuite dans un poste de refroidissement 23. La vitesse de défilement de la carcasse 2 est assurée par un ensemble à chenilles 24 et elle est déterminée notamment par la productivité choisie. Les moyens de chauffage sont déterminés en fonction des paramètres de fabrication tels que la vitesse de défilement de la carcasse, le diamètre du flexible, etc.

Un organe 25 de contrôle d'épaisseur de la gaine d'étanchéité 3 est prévu en aval de l'ensemble à chenilles 24, la carcasse revêtue de la gaine d'étanchéité interne étant stockée sur une bobine de réception 26.

Il est possible de piloter la boucle de régulation et d'asservissement du four de chauffage 13 au moyen d'un capteur, par exemple du type à infrarouge à prise de mesure par une fibre optique qui est logée dans la tête d'extrusion. De cette manière, la température de la carcasse est déterminée non seulement en fonction de sa vitesse de défilement mais également en fonction de la température de la matière extrudée et des caractéristiques thermiques du métal utilisé pour la confection de la carcasse.

Grâce à la présente invention, la liaison de la gaine d'étanchéité interne 3 sur la carcasse métallique 2 est exempte de retassures, comme cela est représenté sur la figure 4, sur laquelle on peut constater que la gaine 3 ne flue qu'en partie entre les spires 8 de la carcasse 2, dans les déjoints 9 de la surface interne 11 de la gaine 3 étant parfaitement uniforme sur la surface externe des spires 8 de ladite carcasse qui peut être réalisée à partir de fils dont la section peut être en forme de S, T, U ou zêta par exemple.

De même, les moyens de chauffage 13 seront adaptés en fonction des matériaux utilisés et peuvent être du type à infrarouge, à convection, ou tout autre moyen de chauffage connu en soi.

Des essais ont été effectués avec diverses gaines, résumés dans les tableaux ci-dessous.

### 1er cas :

| | |
|---|---|
| Flexible | Diamètre interne 6 pouces |
| Carcasse | Feuillard agrafé acier inox 304 |
| Gaine | PVDF KINAR HDC P 900 |
| Four | Deux rampes Infra Rouge puissance 7,5 Kw (x2) |
| Température ambiante | 20°C |

| **PARAMETRES** | **ESSAI No 1** | **ESSAI No 2** | **ESSAI No 3** |
|---|---|---|---|
| Vitesse de défilement m/mn | 5 | 1 | 3 |
| Température feuillard ° C | 85 | 60 | 35 |
| Température extrudat °C | 215 | 225 | 250 |
| Vitesse de rotation vis Tr/mn | 10 | 20 | 60 |
| **RESULTAT** | **MAUVAIS** Remplissage complet des déjoints | **BON** | **MAUVAIS** Présence de retassures |

### 2ème cas :

| | |
|---|---|
| Flexible | Diamètre interne 6 pouces |
| Carcasse | Feuillard agrafé acier inox 304 |
| Gaine | PVDF SOLEF 10/15 DE SOLVAY |
| Four | Deux rampes Infra Rouge puissance 7,5 Kw (x2) |
| Température ambiante | 20°C |

| **PARAMETRES** | **ESSAI No 1** | **ESSAI No 2** | **ESSAI No 3** |
|---|---|---|---|
| Vitesse de défilement m/mn | 5 | 1 | 3 |
| Température feuillard ° C | 85 | 60 | 35 |
| Température extrudat °C | 215 | 225 | 250 |
| Vitesse de rotation vis Tr/mn | 10 | 20 | 60 |
| **RESULTAT** | **MAUVAIS** Remplissage complet des déjoints | **BON** | **BON** |

Il ressort de ces tableaux que les conditions que les paramètres de fabrication doivent être choisis en fonction de la nature du matériau constituant la gaine et qu'avec des vitesses de défilement réduites on obtient de bons résultats avec des températures réduites.

## Revendications

1. Procédé de fabrication d'une conduite flexible (1) du type comprenant, de l'intérieur vers l'extérieur, un tube métallique flexible à enroulement hélicoïdal de spires (2), une gaine interne d'étanchéité (3) disposée autour dudit tube métallique flexible, au moins une nappe d'armures (5) enroulée autour de ladite gaine d'étanchéité interne et au moins une gaine d'étanchéité externe (7), la gaine d'étanchéité interne étant extrudée à l'aide de moyens d'extrusion sur le tube métallique flexible, caractérisé en ce qu'il consiste, en outre, à chauffer ledit tube métallique flexible (2) en amont des moyens d'extrusion et à une température comprise entre 20 et 90°C.

2. Procédé selon la revendication 1, caractérisé en ce que la température de chauffage du tube métallique flexible (2) est inférieure à la température pour laquelle le matériau de la gaine interne d'étanchéité remplirait, par fluage, au moins 95 % du volume des espaces (9) entre les spires (8) dudit tube métallique flexible (2).

3. Procédé selon l'une des revendications 1 ou 2, caractérisé en ce que la température est sensiblement constante sur toute la périphérie du tube métallique flexible (2).

4. Procédé selon l'une des revendications 1 à 3, caractérisé en ce que les moyens de chauffage sont constitués par un chauffage infrarouge.

5. Procédé selon l'une des revendications 1 à 4, caractérisé en ce que la température de chauffage du tube métallique flexible est déterminée en fonction de la nature du matériau constituant la gaine d'étanchéité interne et des dimensions des espaces entre spires.

6. Procédé selon l'une des revendications précédentes, caractérisé en ce que le tube métallique flexible (2) est constitué par un feuillard agrafé.

7. Procédé selon l'une des revendications 1, 2, 3 ou 5, caractérisé en ce que le tube métallique flexible est réalisé par un enroulement hélicoïdal de fils dont la section est notamment en S, T, U ou zêta.

## Patentansprüche

1. Verfahren zur Herstellung einer biegsamen Leitung (1) des Typs, der von innen nach außen aufweist: ein biegsames Metallrohr aus schraubenförmiger Wicklung von Spiralen (2), einen inneren Dichtungsmantel (3), der um das biegsame Metallrohr angeordnet ist, mindestens eine Armierungsschicht (5), die um den inneren Dichtungsmantel gewickelt ist, und mindestens einen äußeren Dichtungsmantel (7), wobei der innere Dichtungsmantel mit Hilfe von Extrusionseinrichtungen auf das biegsame Metallrohr extrudiert ist, dadurch gekennzeichnet, daß das Verfahren ferner darin besteht, das biegsame Metallrohr (2) stromaufwärts der Extrusionseinrichtungen und auf eine Temperatur zwischen 20 und 90°C zu heizen.

2. Verfahren nach Anspruch 1, dadurch gekennzeichnet, daß die Heiztemperatur des biegsamen Metallrohrs (2) unterhalb der Temperatur ist, bei der das Material des inneren Dichtungsmantels durch Kriecheinfluß mindestens 95% des Volumens der Zwischenräume (9) zwischen den Spiralen (8) des biegsamen Metallrohrs (2) füllt.

3. Verfahren nach einem der Ansprüche 1 oder 2, dadurch gekennzeichnet, daß die Temperatur am Umfang des biegsamen Metallrohrs (2) im wesentlichen konstant ist.

4. Verfahren nach einem der Ansprüche 1 bis 3, dadurch gekennzeichnet, daß die Heizeinrichtungen aus einer Infrarotheizung bestehen.

5. Verfahren nach einem der Ansprüche 1 bis 4, dadurch gekennzeichnet, daß die Heiztemperatur des biegsamen Metallrohrs abhängig von der Natur des Materials, das den inneren Dichtungsmantel bildet, und den Abmessungen der Zwischenräume zwischen den Spiralen bestimmt wird.

6. Verfahren nach einem der vorstehenden Ansprüche, dadurch gekennzeichnet, daß das biegsame Metallrohr (2) aus einem gefalzten Band gebildet ist.

7. Verfahren nach einem der Ansprüche 1, 2, 3 oder 5, dadurch gekennzeichnet, daß das biegsame Metallrohr aus einer schraubenförmigen Wicklung von Drähten hergestellt ist, deren Querschnitt insbesondere S-, T-, U- oder Zeta-förmig ist.

## Claims

1. Process for manufacturing a flexible pipe (1) of the type comprising, from the inside to the outside, a flexible metal tube (2) having a helical winding of turns, an internal sealing sheath (3) arranged around the said flexible metal tube, at least one armouring ply (5) wound around the said internal sealing sheath and at least one external sealing sheath (7), the internal sealing sheath being extruded onto the flexible metal tube using extrusion means, characterized in that it furthermore consists in heating the said flexible metal tube (2) upstream of the extrusion means and to a temperature comprised between 20 and 90°C.

2. Process according to Claim 1, characterized in that the temperature to which the flexible metal tube (2) is heated is less than the temperature for which the material of the internal sealing sheath would fill, by plastic flow, at least 95% of the volume of spaces (9) between the turns (8) of the said flexible metal tube (2).

3. Process according to one of Claims 1 and 2, characterized in that the temperature is more or less constant over the entire periphery of the flexible metal tube (2).

4. Process according to one of Claims 1 to 3, characterized in that the heating means consists of an infrared heating device.

5. Process according to one of Claims 1 to 4, characterized in that the temperature to which the flexible metal tube is heated is determined depending on the nature of the constituent material of the internal sealing sheath and on the dimensions of the spaces between the turns.

6. Process according to one of the preceding claims, characterized in that the flexible metal tube (2) consists of an interlocked metal strip.

7. Process according to one of Claims 1, 2, 3, or 5, characterized in that the flexible metal tube is produced by a helical winding of wires whose cross-section is, in particular, S-, T-, U- or Zeta-shaped.
